# EUROPÄISCHE PATENTSCHRIFT

(11) **EP 1 081 421 B1**
(45) Veröffentlichungstag und Bekanntmachung des Hinweises auf die Patenterteilung: **15.09.2004**
(21) Anmeldenummer: 00114349.4
(22) Anmeldetag: 05.07.2000
(51) Int. Cl.: F16L 13/14

(54) **Fitting oder Armatur zur Erstellung einer Pressverbindung mit einem eingesteckten Rohrende**
Fitting for a press-fit connection with an inserted pipe end
Raccord ou installation à raccord à compression avec une conduite insérée

(30) Priorität: 02.09.1999 DE 29915400 U
(43) Veröffentlichungstag der Anmeldung: 07.03.2001
(73) Patentinhaber: VIEGA GmbH & Co. KG., 57439 Attendorn (DE)
(72) Erfinder: Viegener, Walter, 57439 Attendorn (DE)
(74) Vertreter: Specht, Peter, Dipl.-Phys.

(56) Entgegenhaltungen:
- DE-C- 19 620 165
- US-A- 5 869 160

## Beschreibung

Die Erfindung bezieht sich auf einen Fitting oder eine Armatur mit einem Anschlußstutzen zur Aufnahme eines Rohrendes, wobei zur Erstellung einer Preßverbindung der Anschlußstutzen mit dem eingesteckten Rohrende mittels eines Preßwerkzeuges kalt verformt ist, wie z.B. aus der Druckschrift DE 196 20 165 C bekannt.

Es sind Fittings aus Metall, z.B. aus Edelstahl, Kupfer, Aluminium, einer Metallegierung oder aus einem Metallguß bekannt, die durch eine Kaltverformung durch Pressen mittels eines Preßwerkzeugs flüssigkeits- und gasdicht mit einem eingesteckten Rohrende verbunden werden.

Das Rohr kann aus Metall oder Kunststoff bestehen. Im letzteren Fall wird in das Rohrende eine Stützhülse aus Metall eingesetzt.

Das Rohr kann auch mit dem Anschlußstutzen einer Armatur durch Kaltverformung der zusammengesteckten Teile verbunden werden.

Bei der Installation von Rohrleitungen ist es wichtig, daß von dem Monteur sämtliche Preßverbindungen ausgeführt werden, damit Leckstellen vermieden werden.

Der Erfindung liegt die Aufgabe zugrunde, mit einfachen Mitteln den Fitting oder die Armatur so zu gestalten, daß die im Verbindungsbereich zwischen dem Fitting oder der Armatur und dem eingesteckten Rohr vorgenommene Preßverbindung optisch deutlich erkennbar ist.

Diese Aufgabe wird erfindungsgemäß dadurch gelöst, daß die mit dem Preßwerkzeug zusammenwirkenden Außenflächen des Anschlußstutzens des Fittings oder der Armatur mit einer Schicht aus mikroverkapselten Farbstoffen in sprengbaren Hüllen versehen sind.

Beim Ansetzen des Preßwerkzeuges an dem Anschlußstutzen des Fittings oder der Armatur sowie bei der Durchführung des Preßvorgangs werden die Hüllen der mikroverkapselten Farbstoffe, die von dem Preßwerkzeug erfaßt werden, gesprengt, so daß der Farbstoff ausfließen kann. Der von den Hüllen befreite Farbstoff zeigt deutlich die Durchführung der Verpressung der zusammengesteckten Teile an. Der Monteur kann somit schnell kontrollieren, ob in einem Leitungssystem an sämtlichen Stellen Fittings oder Armaturen mit den in ihre Anschlußstutzen eingeführten Rohrenden durch Verpressung und Kaltverformung miteinander verbunden sind.

Die Fittings oder Armaturen können die verschiedensten Raumformen aufweisen. Gemeinsam ist diesen Ausführungsformen ein Anschlußstutzen zur Aufnahme eines Rohrendes. Dieser Anschlußstutzen ist mit einem einen Dichtungsring aufnehmenden Wulstring versehen, wobei der Dichtungsring nach der Kaltverformung an der Außenfläche des in den Anschlußstutzen eingesteckten Rohrendes kraftschlüssig anliegt.

Bei dieser Ausführungsform erstreckt sich die Schicht aus mikroverkapselten Farbstoffen über die Außenfläche des Wulstringes und über den oder die benachbarten Bereiche des Anschlußstutzens, die kalt verformt werden.

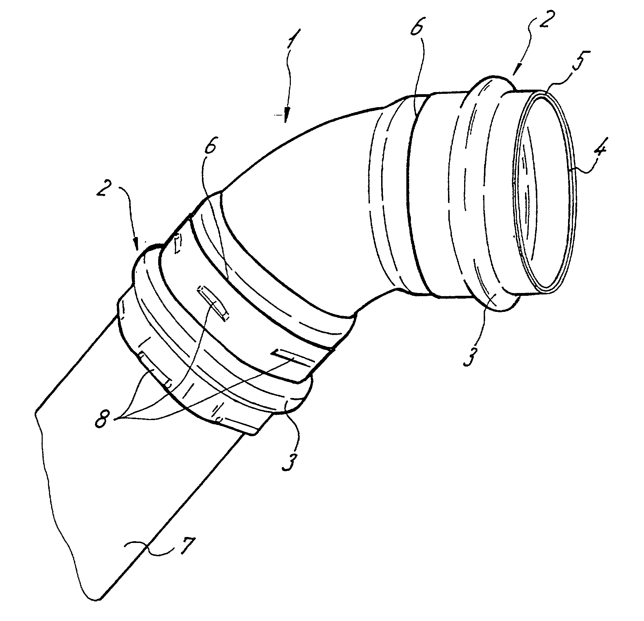

Die Figur zeigt in perspektivischer Darstellung einen Fitting 1, dessen Anschlußstutzen 2 auf der rechten Seite noch nicht kalt verformt ist. Dieser Anschlußstutzen weist einen Wulstring 3 zur Aufnahme eines Dichtungsringes auf. Dieser Wulstring ist gegenüber dem stirnseitigen Rand 4 versetzt angeordnet.

Die Außenflächen der Anschlußstutzen 2 sind mit einer Schicht 5 aus mikroverkapselten Farbstoffen belegt, die sich vom stirnseitigen Rand 4 bis zu der ringförmigen Begrenzungslinie 6 erstreckt.

Das linke Ende des Fittings 1 zeigt eine Preßverbindung zwischen dem Anschlußstutzen 2 und einem eingesteckten Ende eines Rohres 7.

Bei der Kaltverformung mit einem Preßwerkzeug werden der Wulstring und zu beiden Seiten des Wulstringes 3 vorgesehene, auf dem Umfang verteilte Stellen 8 bleibend verformt. Diese Verformungen liegen in einem Bereich, in dem der Anschlußstutzen 2 mit einer Schicht 5 aus mikroverkapselten Farbstoffen belegt ist, so daß mittels des Preßwerkzeuges die Hüllen der Mikrokapseln zerstört werden und der Farbstoff den verpreßten Bereich kennzeichnet.

Die Kennzeichnung kann auch darin liegen, daß durch die Sprengung der Hüllen der mikroverkapselten Farbstoffe ein Farbumschlag von einer auf eine andere Farbe erreichbar ist.

## Patentansprüche

1. Fitting (1) oder Armatur mit einem Anschlußstutzen (2) zur Aufnahme eines Rohrendes, wobei zur Erstellung einer Preßverbindung der Anschlußstutzen (2) mit dem eingesteckten Rohrendemittels eines Preßwerkzeuges kalt verformt ist, **dadurch gekennzeichnet, daß** die mit dem Preßwerkzeug zusammenwirkenden Außenflächen des Anschlußstutzens (2) mit einer Schicht (5) aus mikroverkapselten Farbstoffen in sprengbaren Hüllen versehen sind.

2. Fitting (1) oder Armatur mit einem Anschlußstutzen (2), der einen Dichtungsring aufnehmenden Wulstring (3) aufweist nach Anspruch 1, **dadurch gekennzeichnet, daß** die Schicht (5) sich über den Bereich des Wulstringes (3) und über den oder die benachbarten Bereiche des Anschlußstutzens (2) erstreckt, die kalt verformt werden.

3. Fitting (1) oder Armatur nach Anspruch 1 oder 2, **dadurch gekennzeichnet, daß** durch die Sprengung der Hüllen von mikroverkapselten Farbstoffen durch ein Preßwerkzeug ein Farbumschlag von einer auf eine andere Farbe erreichbar ist.

## Claims

1. Fitting (1) having a connection piece (2) for accommodating a pipe end, the connection piece (2) being cold-worked together with the inserted pipe end by means of a crimping tool in order to produce a crimped connection, **characterized in that** the outer surfaces of the connection piece (2) which interact with the crimping tool are provided with a coating (5) of microencapsulated dyes in burstable envelopes.

2. Fitting (1) having a connection piece (2) which has a bead ring (3) accommodating a sealing ring according to Claim 1, **characterized in that** the coating (5) extends over the region of the bead ring (3) and over the adjacent region or regions of the connection piece (2) which is/are cold-worked.

3. Fitting (1) according to Claim 1 or 2, **characterized in that** a colour change from one colour to another can be achieved by the bursting of the envelopes of microencapsulated dyes by means of a crimping tool.

## Revendications

1. Raccord ou accessoire de robinetterie (1) avec un embout de raccordement (2) destiné à recevoir une extrémité de tube, l'embout de raccordement (2) étant déformé à froid, avec l'extrémité de tube introduite, au moyen d'un outil de pressage afin d'établir un assemblage pressé, **caractérisé en ce que** les surfaces extérieures de l'embout de raccordement (2) coopérant avec l'outil de pressage sont munies d'une couche (5) de pigments micro-encapsulés dans des enveloppes à éclatement.

2. Raccord ou accessoire de robinetterie (1) avec un embout de raccordement (2) qui présente une bague à bourrelet (3) recevant une bague d'étanchéité, selon la revendication 1, **caractérisé en ce que** la couche (5) s'étend sur la partie de la bague à bourrelet (3) et sur la ou les parties voisines de l'embout de raccordement (2) qui sont déformées à froid.

3. Raccord ou accessoire de robinetterie (1) selon la revendication 1 ou 2, **caractérisé en ce que**, du fait de l'éclatement des enveloppes de pigments micro-encapsulés, un changement de couleur d'une teinte à une autre peut être obtenu à l'aide d'un outil de pressage.
